# EUROPÄISCHE PATENTSCHRIFT

(11) **EP 2 181 370 B1**
(45) Veröffentlichungstag und Bekanntmachung des Hinweises auf die Patenterteilung: **29.07.2015**
(21) Anmeldenummer: 08787023.4
(22) Anmeldetag: 08.08.2008
(51) Int. Cl.: G05B 19/418, G05B 19/042, G06F 21/00

(54) **VERFAHREN ZUR KOMPATIBILITÄTSPRÜFUNG EINES MEßSYSTEMS BESTEHEND AUS EINEM MESSUMFORMER UND EINEM SENSOR**
METHOD FOR CHECKING THE COMPATIBILITY OF A MEASUREMENT SYSTEM COMPRISING A MEASURING TRANSDUCER AND A SENSOR
PROCÉDÉ DE VÉRIFICATION DE COMPATIBILITÉ D'UN SYSTÈME DE MESURE CONSTITUÉ D'UN TRANSDUCTEUR DE MESURE ET D'UN CAPTEUR

(30) Priorität: 21.08.2007 DE 102007039530
(43) Veröffentlichungstag der Anmeldung: 05.05.2010
(73) Patentinhaber: Endress+Hauser Conducta Gesellschaft für Mess- und Regeltechnik mbH+Co. KG, 70839 Gerlingen (DE)
(72) Erfinder: WITTMER, Detlev, 75433 Maulbronn (DE); WEISS, Reinhard, 71229 Leonberg (DE)
(74) Vertreter: Andres, Angelika Maria
(86) Internationale Anmeldenummer: PCT/EP2008/060427
(87) Internationale Veröffentlichungsnummer: WO 2009/024480

(56) Entgegenhaltungen:
- WO-A-2006/073702
- US-A1- 2003 105 961
- US-A1- 2005 010 782
- US-A1- 2007 123 316
- US-A1- 2007 135 092
- US-B1- 6 298 255

## Beschreibung

Die Erfindung betrifft ein Verfahren zur Kompatibilitätsprüfung eines Meßsystems bestehend aus einem Messumformer und einem Sensor gemäß dem Oberbegriff des Anspruchs 1.

In der Prozessautomatisierungstechnik werden vielfach Meßsysteme eingesetzt, die aus einem Messumformer und einem Sensor bestehen. Der Sensor dient zur Erfassung einer chemisch/physikalischen Messgröße, die im Messumformer nach einer Weiterverarbeitung entweder dargestellt bzw. zur Prozesssteuerung/Prozessanzeige weitergeleitet wird.

Die Kommunikation zwischen Sensor und Messumformer kann analog bzw. digital erfolgen.

Im Folgenden sollen nur Meßsysteme betrachtet werden, bei denen eine digitale Kommunikation zwischen Sensor und Messumformer erfolgt.

Ein Beispiel für ein solches digital kommunizierendes Meßsystem sind das Produkt Liquiline als Messumformer und das Produkt Memosens als Sensor. Beide Produkte werden von der Anmelderin hergestellt und vertrieben.

Bei kommerziell erfolgreichen Meßsystemen besteht bei den Herstellern der Meßsysteme häufig der Wunsch nach Kooperationspartnern, die das betreffende Meßsystem oder Komponenten davon z. B. den Messumformer bzw. den Sensor in Lizenz nachbauen.

Hierbei muß jedoch gewährleistet werden, dass sowohl die vom Hersteller des Meßsystems als Lizenzgeber gefertigten Orginal-Komponenten, wie auch die von den Lizenznehmern gefertigten Lizenz-Komponenten zueinander kompatibel sind und einwandfrei zusammenarbeiten.

Außerdem soll verhindert werden, dass unberechtigte Nachahmer Sensoren bzw. Messumformer auf den Markt bringen, die mit den Orginal-Komponenten bzw. mit den Lizenzierten Komponenten einwandfrei zusammenarbeiten.

Aufgabe der Erfindung ist es ein Verfahren zur Kompatibilitätsprüfung eines Meßsystems bestehend aus einem Messumformer und einem Sensor anzugeben, bei dem sichergestellt wird, dass nur

Orginal-Komponenten bzw. Lizenz-Komponenten von Messumformern bzw. Sensoren einwandfrei zusammenarbeiten.

Gelöst wird diese Aufgabe durch die im Anspruch 1 angegebenen Verfahrensmerkmale.

Im Messumformer wird ein Kenndatensatz und eine erste Signatur für diesen Kenndatensatz zu gespeichert und im Sensor mit einem Signieralgorithmus eine zweite

Signatur für den Kenndatensatz berechnet und die Signaturen miteinander verglichen. Dabei wird sowohl im Sensor wie auch im Messumformer geprüft, ob die Signatur der anderen Komponenten mit der eigenen Signatur übereinstimmt.

Nur wenn beide Signaturen jeweils übereinstimmen ist gewährleistet, dass sowohl die erste Signatur wie auch der Signaturalgorithmus vom Lizenzgeber stammen und es sich somit beim Messumformer bzw. beim Sensor um Orginal-Komponenten oder Lizenz-Komponenten handelt und damit der Messumformer und der Sensor kompatibel sind. In diesem Fall kann der Messumformer auf Daten und/oder Funktionalitäten des Sensors zugreifen.

Vor der Berechnung der ersten Signatur muß der Kenndatensatz natürlich in den Sensor übertragen werden.

Der Lizenzgeber möchte natürlich unterschiedliche Zugriffsrechte vergeben können. Deshalb ist im Kenndatensatz ein Berechtigungsschlüssel enthalten, der die Zugriffsrechte festlegt.

Der Lizenzgeber möchte für individuelle Lizenz-Komponenten eine Lizenz vergeben. Deshalb ist in einer Weiterentwicklung vorgesehen, dass der Kenndatensatz eine den Messumformer charakterisierende Kennung (z.B. Herstellercode, Serien-Nummer) umfasst.

Um die Sicherheit des Signieralgorithmus zu gewährleisten wird in einer Weiterentwicklung der Erfindung beim Vergleich der Signaturen keine der Signaturen im Klartext übertragen sondern jeweils nur über Einwegfunktionen gewonnene Werte.

Zur weiteren Sicherheit des Signieralgorithmus sind gemäß einer Weiterentwicklung der Erfindung, der Signieralgorithmus im Sensor gegen Auslesen geschützt.

Um die Abwärtskompatibilität mit älteren Messumformern bzw. älteren Sensoren zu gewährleisten, werden gemäß einer Weiterentwicklung der Erfindung, wenn die beiden Signaturen nicht übereinstimmen, Mindestberechtigungen eingeräumt.

Wird Missbrauch des Signieralgorithmus durch einen unberechtigten Hersteller festgestellt, so wird gemäß einer Weiterentwicklung der Erfindung der Herstellercode dieses Herstellers in den Kenndatensatz bei zukünftig zu fertigten Messumformer aufgenommen.

Nachfolgend ist die Erfindung anhand eines in der Zeichnung dargestellten Ausführungsbeispiels näher erläutert. Es zeigen:
Fig. 1 Meßsystem mit einem Signatur-Rechner in schematischer Darstellung
Fig. 2 Tabelle mit den wesentlichen Verfahrensschritten
Fig. 3 Tabelle zur Verifikation des Sensors
Fig. 4 Tabelle zur Verifikation des Messumformers
Fig. 5 Software-Struktur eines Sensors

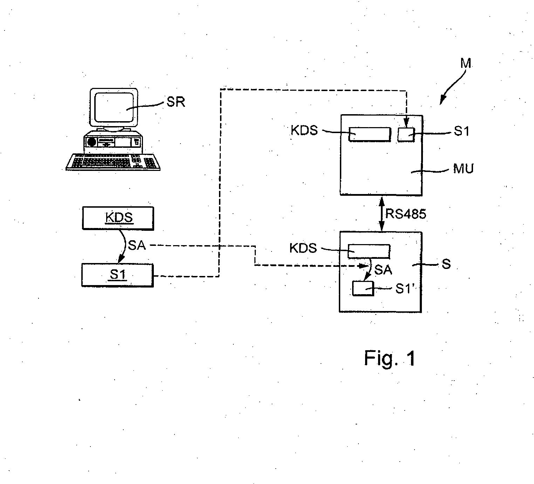

Das in Fig. 1 dargestellte Meßsystem M umfasst einen Sensor S und einen Messumformer MU die über eine Kommunikationsverbindung Daten austauschen.

Im dargestellten Fall handelt es sich um eine RS485 Kabel-Verbindung. Denkbar ist auch eine drahtlose Verbindung.

Bei dem Sensor S kann es sich z. B. um einen pH, Leitfähigkeitssensor oder Sauerstoffsensor handeln. Im Messumformer MU erfolgt eine Weiterverarbeitung der vom Sensor erfassten Meßgröße. Der Messumformer MU dient zur Darstellung des Messwertes und kann diesen z.B. über einen Feldbus weiterleiten.

Das Meßsystem M ist im Prinzip aufgebaut wie eine Messstelle bestehend aus den Produkten Liquiline und Memosens der Anmelderin. Entsprechend der Erfindung müssen jedoch gewisse Anpassungen erfolgen.

Neben dem Meßsystem M ist ein Signatur-Rechner SR dargestellt, der sich beim Lizenzgeber befindet. Der Signieralgorithmus SA und der bei diesem Algorithmus verwendete private Schlüssel PS ist nur dem Lizenzgeber bekannt.

Der Lizenznehmer teilt dem Lizenzgeber charakteristische Daten zu dem zu lizenzierenden Messumformer MU wie Serien-Nummer und die gewünschten Funktionalitäten mit. Auf der Basis dieser Daten wird ein Kenndatensatz KDS zusammengestellt, der den Herstellecode des Lizenznehmers, die Serien-Nummer des Messumformers und einen Berechtigungsschlüssel BS umfasst.

Dieser Kenndatensatz KDS wird mit dem Signieralgorithmus SA signiert. Dabei wird mit einem privaten Schlüssel PS eine Signatur S1 erzeugt. Der Kenndatensatz KDS wird zusammen mit der Signatur S1 dem Lizenznehmer übermittelt. Dieser speichert beide Informationen in dem Messumformer mit der entsprechenden Serien-Nummer ab. Dadurch wird der Messumformer MU zu einem lizensierten Messumformer.

Bei einem lizensierten Sensor S wird der Signieralgorithmus SA, der den privaten Schlüssel PS umfasst, gespeichert.

Die Sensorinformationen sind gegen ein Auslesen dadurch geschützt, dass sie in einem Speicher (FLASH-Memory) abgelegt sind, der auf einem Mikrochip mit einem Mikrocontroller integriert ist.

Nachfolgend ist das erfindungsgemäße Verfahren anhand eines lizensierten Messumformers und eines lizensierten Sensors näher beschrieben.

Wie bereits oben erwähnt sind im Messumformer MU der Kenndatensatz KDS und die erste Signatur S1 gespeichert. Im Sensor S ist der Signieralgorithmus SA hinterlegt.

Nachdem Messumformer MU und Sensor S miteinander verbunden worden sind, wird das Meßsystem M initialisiert, dabei werden bestimmte Initialisierungsroutinen abgearbeitet. Hierbei werden u. a. für die Kommunikation wichtige Parameter zwischen Messumformer MU und Sensor S ausgetauscht.

Während der Initialisierungsphase erfolgt auch die Kompatibilitätsprüfung.

In einem ersten Verfahrensschritt a) wird der Kenndatensatz KDS vom Messumformer MU an den Sensor S übertragen. Somit steht im Sensor der Kenndatensatz KDS für weitere Berechnungen zur Verfügung. Die erste Signatur S1 wird nicht übertragen.

In einem Verfahrensschritt b) wird im Sensor S eine zweite Signatur S1' für den Kenndatensatz KDS erzeugt. Dabei wird der im Sensor S hinterlegte Signieralgorithmus SA auf den Kenndatensatz KDS angewendet. Als Ergebnis erhält man eine zweite Signatur S1'.

In einem weiteren Verfahrensschritt c) erfolgt im Sensor eine Prüfung ob die Signatur S1'die im Sensor ermittelt wurde, mit der Signatur S1 übereinstimmt. Hierbei wird sicherheitshalber die Signatur S1 nicht im Klartext vom Messumformer MU zum Sensor übertragen. Durch ein geschicktes Frage-Antwort-Spiel kann im Sensor S eindeutig festgestellt werden ob eine Übereinstimmung vorliegt.

Damit "weiss" der Sensor S, dass er an einen lizenzierten bzw. orginalen Messumformer MU angeschlossen ist, da nur solche Messumformer die "richtige" Signatur S1 für den Kenndatensatz KDS enthalten können.

Im Verfahrensschritt d) erfolgt die gleiche Prüfung auf der Seite des Messumformers MU.

Auch hier wird geprüft, ob die im Messumformer MU gespeicherte Signatur S1 mit der berechneten Signatur S1' übereinstimmt. Auch hier wird sicherheitshalber die Signatur S1' nicht im Klartext vom Sensor S zum Messumformer MU übertragen. Durch ein geschicktes Frage-Antwort-Spiel kann im Messumformer MU eindeutig festgestellt werden ob eine Übereinstimmung vorliegt.

Damit "weiss" auch der Messumformer MU, dass an ihn ein lizenzierter bzw. orginar Sensor angeschlossen ist, da nur ein lizensierter Sensor S den gleichen Signaturalgorithmus SA enthält, der auch vom Lizenzgeber verwendet wird.

Stimmen die Signaturen S1 und S1' überein ist sichergestellt, dass der Messumformer MU und der Sensor S kompatibel sind. Damit kann der Messumformer MU auf Daten und/oder Funktionen des Sensors S zugreifen. Wesentlich bei dem Verfahren ist, dass sowohl auf der Seite des Messumformers wie auch auf der Seite des Sensors S geprüft wird ob es sich bei der angeschlossenen Komponente um eine lizensierte oder orginale Komponente handelt.

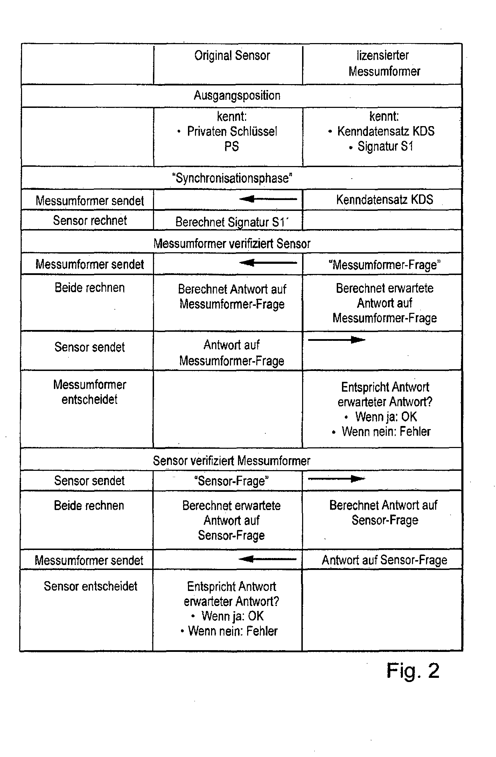

In Fig. 2 sind die wesentlichen Elemente des Verfahrens in tabellarischer Form zusammengefasst.

Handelt es sich bei einer der beiden Komponenten um eine nicht berechtigte Komponente so kann die berechtigte Komponente dies feststellen und deshalb den Datenaustausch völlig verweigern oder nur in einem eingeschränkten Masse zulassen.

Im Sensor S sind Daten über Indizes abrufbar. Typischerweise sind 256 Indizes vorgesehen.

Durch Übertragung eines Berechtigungsschlüssels BS mit 256 Bits kann im Sensor festgelegt werden welche Indizes vom Messumformer MU gelesen werden können und welche nicht.

In einfacher Weise bedeutet der Wert 0 im Berechtigungsschlüssel BS, dass der entsprechende Index nicht gelesen werden kann. Beim Wert 1 ist ein Lesen möglich. Entsprechend ist die Vergabe von Schreibrechten möglich. Der Wert 0 bedeutet nur Schreibenrechte, der Wert 1 bedeutet Lese- und Schreibrechte. Ist der Berechtigungsschlüssel zweiteilig aus jeweils 256 Bits, so können beide Teilschlüssel im Sensor addiert werden. Ein Wert 0 für den entsprechenden Index bedeutet keine Lese- und keine Schreibrechte, der Wert 1 bedeutet nur Leserechte und der Wert 2 bedeutet Lese- und Schreibrechte.

Über den Berechtigungsschlüssel BS kann der Lizenzgeber festlegen, welche Berechtigungen der Lizenznehmer für den jeweiligen Messumformer erwirbt. Da der Berechtigungsschlüssel BS bei dem Signieralgorithmus berücksichtigt wird, ist eine Manipulation nicht möglich, da dies automatisch bei der Berechnung der Signatur S1' zu einem von der Signatur S1 abweichenden Ergebnis führen würde.

Da der Kenndatensatz KDS den Herstellercode des Lizenznehmers und die Serien-Nummer S/N des Messumformers MU umfasst, können Lizenzen für einzelne Messumformer vergeben werden.

Nachfolgend ist der Signieralgorithmus SA näher erläutert.

Es sei
*f*:*{*0,...,2"-1*}*×*{*0,...,2"-1*}*→*{*0,...,2"'-1*}*: eine berechenbare Einwegfunktion. Die Kenntnis der Funktion f wird im Folgenden synonym mit Kenntnis des Algorithmus zur Berechnung von *f*(*x,y*) bei Vorliegen von *x* und *y* verwendet.
*n* : Größe der Eingabedaten (in Bits)
*o* : Größe des Schlüssels (in Bits)
*m* : Größe der Ausgabedaten (in Bits)
*x* : Kenndatensatz KDS
*y*: privater Schlüssel PS
*f*(*x*, *y*): Ausgabedaten der Funktion *f*

Der Algorithmus zur Berechnung der Funktion f muss so ausgelegt sein, dass er im Hinblick auf die im Sensor S verfügbaren Kapazitäten wie Flash-Speicher, RAM-Speicher und CPU-Zeit während der Initialisierungsphase mit dem Protokoll für den Datenaustausch zwischen Sensor S und Messumformer MU durchführbar ist. Ein mögliches Protokoll für diesen Datenaustausch ist das Memosens-Protokoll der Fa. Endress+Hauser.

Die Funktion f(x, y) kann als Einwegfunktion über eine kryptographische Hash-Funktion definiert werden. f_{c} (x, y) = h (2^{p}. x + y)

Die Signatur S1 bzw. S1' wird wie folgt berechnet S1 = h (2^{p}. x + y) und S1'=h(2^{p}.x+y).

Um bei der Prüfung gemäß den Verfahrensschritten c) und d) die Signaturen nicht im Klartext übertragen zu müssen, können ebenfalls Einwegfunktionen fₜ bzw. fₛ verwendet werden.

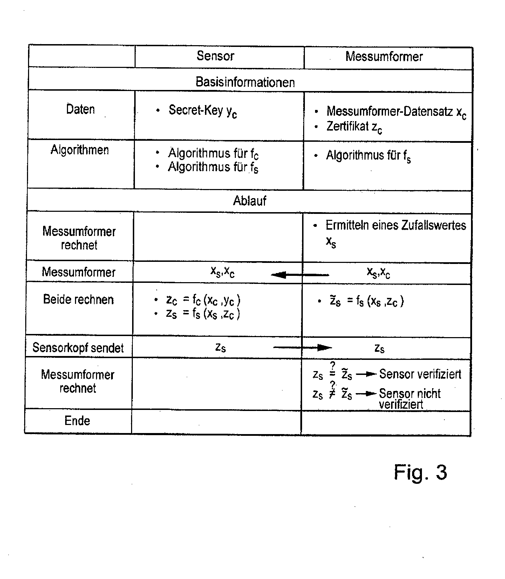

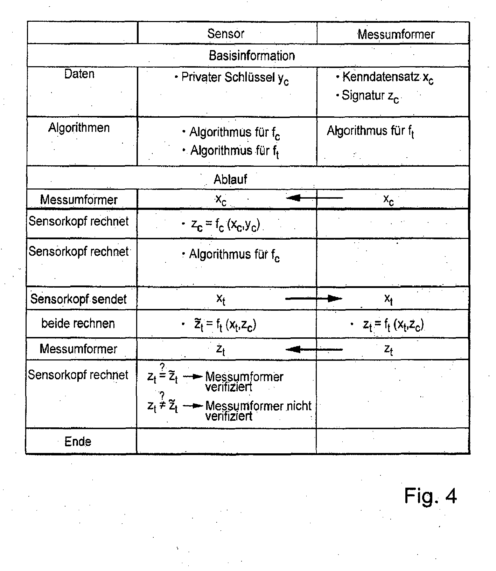

Wie dies erfolgt, ist in den Figuren Fig. 3 für die Verifikation des Sensors bzw. Fig. 4 für die Verifikation des Messumformers tabellarisch dargestellt. Da in diesen beiden Tabellen Formeln verwendet wurden, mussten einige Bezeichnungen angepasst werden. Das Subskript t steht für Messumformer (transmitter); das Subskript s steht für Sensor.

Um den Speicherplatzbedarf im Sensor zu verringern, kann für alle drei Funktionen f_{c}, fₜ und fₛ der gleiche Algorithmus verwendet werden.

Im Sensor S sind Methoden hinterlegt, die ein Lesen und Schreiben von Daten des Sensors S ermöglichen. Die Zugriffsrechte für diese Daten werden extern festegelegt. Es sind keine Methoden vorgesehen, die ein Entsperren von Daten ermöglichen.

Im Sensor S ist auch ein Bootloader für Updates der Sensor-Firmware vorgesehen. Dieser Bootloader enthält den privaten Schlüssel PS, der mit geeigneten Maßnahmen gegen Auslesen zu schützen ist. Damit braucht der private Schlüssel PS nicht in den Firmware Updates enthalten zu sein. Auch sollten Firmware Updates gegen Manipulationen geschützt werden. Eine Möglichkeit besteht darin, die Checksumme der Firmware mit dem privaten Schlüssel PS zu verschlüssseln und damit zu signieren.

Um das Auslesen der Firmware des Messumformers MU zu verhindern, ist vorgesehen, dass der Lizenzgeber dem Lizenznehmer einen Chip für den entsprechenden Messumformer liefert, der einen Mikrocontroller und einen On-Board Flash-Speicher besitzt. Über die Aktivierung eines Security-Mechanismus im Mikrocontroller kann ein Auslesen des Flash-Speichers verhindert werden. Auf diesem Chip ist auch das Kommunikationsprotokoll hinterlegt. Ein Messumformer-Hersteller muss dann nur diese Chips in seine Messumformer integrieren um kompatible Messumformer zu erhalten.

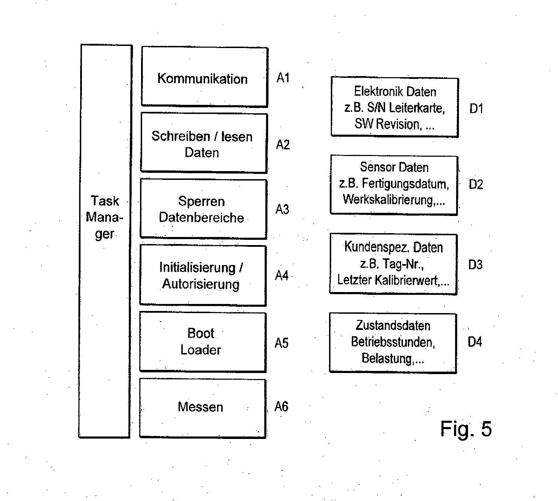

In Fig. 5 ist die Software-Struktur eines Sensors S mit unterschiedlichen Funktionen und verschiedenen Datensätzen schematisch dargestellt. Ein Taskmanger sorgt dafür, dass die einzelnen Programmaufgaben A1-A6 mit H der entsprechenden Priorität zeitgerecht bearbeitet werden.

Die Funktion "Kommunikation" ist für die protokollgerechte Abwicklung des Datenaustauschs zwischen Sensor S und Messumformer MU verantwortlich.

Die Sensor-Daten sind in vier Datenblöcke D1-D4 aufgeteilt. Insbesondere für diese Datenblöcke ist es sinnvoll unterschiedliche Rechte zu vergeben. Die Erfindung eignet sich besonders für zweiteilige pH-, Redox- bzw. Leitfähigkeitssensoren, wie sie in der Analysetechnik eingesetzt werden. Solche Sensoren bestehen aus einer Verbrauchs-Elektrode und einem Steckkopf mit Kabel, das zur Verbindung zum Messumformer dient. Die Datenübertragung zwischen Verbrauchs-Elektrode und Steckkopf erfolgt über eine induktive Datenübertragungsstrecke. Solche Sensoren werden von der Anmelderin unter der Bezeichnung Memosens vertrieben.

## Patentansprüche

1. Verfahren zur Kompatibilitätsprüfung eines Meßsystems bestehend aus einem Messumformer (MU) und einem Sensor (S), die über eine Kommunikationsverbindung Daten austauschen, wobei im Messumformer (MU) ein Kenndatensatz (KDS) und eine erste Signatur (S1) für den Kenndatensatz (KDS) gespeichert sind, mit folgenden Verfahrensschritten:
a. Übertragung des Kenndatensatzes (KDS) vom Messumformer (MU) an den Sensor (S);
b. Berechnung einer zweiten Signatur (S1') für den Kenndatensatz (KDS) im Sensor (S) mit Hilfe eines Signieralgorithmus (SA);
c. Prüfung im Sensor (S), ob die erste Signatur (S1) mit der zweiten Signatur (S1') übereinstimmt;
d. Prüfung im Messumformer (MU), ob die zweite Signatur (S1') mit der ersten Signatur (S1) übereinstimmt;
wobei, wenn die erste Signatur (S1) und die zweite Signatur (S1') übereinstimmen, der Messumformer (MU) und der Sensor (S) kompatibel sind und der Messumformer (MU) auf Daten und/oder Funktionen des Sensors (S) zugreifen kann,
**dadurch gekennzeichnet, dass** der Kenndatensatz (KDS) einen Berechtigungsschlüssel (BS) umfasst, der den Zugriff auf Daten und/oder Funktionalitäten des Sensors (S) ermöglicht.

2. Verfahren nach Anspruch 1, **dadurch gekennzeichnet, dass** der Kenndatensatz (KDS) Daten enthält, die einen Messumformer eindeutig charakterisieren.

3. Verfahren nach Anspruch 1 oder 2, **dadurch gekennzeichnet, dass** bei der Prüfung, ob die Signaturen (S1) und (S1') übereinstimmen, die Signaturen (S1) bzw. (S1') nicht in Klartext ausgetauscht werden, sondern den Signaturen (S1) bzw. (S1') über Einwegfunktionen zugeordnete Werte.

4. Verfahren nach einem der Ansprüche 1 bis 3, **dadurch gekennzeichnet, dass** der Signieralgorithmus im Sensor so gespeichert ist, dass er gegen ein Auslesen geschützt ist.

5. Verfahren nach einem der Ansprüche 1 bis 4, **dadurch gekennzeichnet, dass** wenn die Signaturen (S1) und (S1') nicht übereinstimmen, Mindestberechtigungen für den Datenzugriff eingeräumt werden.

## Claims

1. Procedure designed to check the compatibility of a measuring system consisting of a transmitter (MU) and a sensor (S) which exchange data via a communication convection, wherein a characteristic data set (KDS) and a first signature (S1) for the characteristic data set (KDS) are saved in the transmitter (MU), with the following procedural steps:
a. Transmission of the characteristic data set (KDS) from the transmitter (MU) to the sensor (S);
b. Calculation of a second signature (S1') for the characteristic data set (KDS) in the sensor (S) using a signature algorithm (SA);
c. Check in the sensor (S) to verify whether the first signature (S1) matches the second signature (S1');
d. Check in the transmitter (MU) to verify whether the second signature (S1') matches the first signature (S1)
wherein if the first signature (S1) and the second signature (S1') match, the transmitter (MU) and the sensor (S) are compatible and the transmitter (MU) can access data and/or functions of the sensor (S),
**characterized in that** the characteristic data set (KDS) comprises an authorisation code (BS) that enables access to data and/or functionalities of the sensor (S)

2. Procedure as claimed in Claim 1, **characterized in that** the characteristic data set (KDS) contains data that uniquely characterize a transmitter.

3. Procedure as claimed in Claim 1 or 2, **characterized in that** during the test to verify whether the signatures (S1) and (S1') match, the signatures (S1) or (S1') are not exchanged in plain text and instead are exchanged with values assigned to the signatures (S1) or (S1') via unidirectional functions.

4. Procedure as claimed in one of the Claims 1 to 3, **characterized in that** the signature algorithm is saved in the sensor in such a way that it is protected from being read out.

5. Procedure as claimed in one of the Claims 1 to 4, **characterized in that** if the signatures (S1) and (S1') do not match minimum rights are granted for data access.

## Revendications

1. Procédé destiné au contrôle de compatibilité d'un système de mesure constitué d'un transmetteur (MU) et d'un capteur (S), qui échangent des données par l'intermédiaire d'une liaison de communication, pour lequel un jeu de données caractéristiques (KDS) et une première signature (S1) pour le jeu de données caractéristiques (KDS) sont enregistrés dans le transmetteur (MU), avec les étapes de procédés suivantes :
a. Transmission du jeu de données caractéristiques (KDS) du transmetteur (MU) au capteur (S) ;
b. Calcul d'une deuxième signature (S1') pour le jeu de données caractéristiques (KDS) dans le capteur (S) à l'aide d'un algorithme de signature (SA) ;
c. Contrôle dans le capteur (S) vérifiant si la première signature (S1) coïncide avec la deuxième signature (S1') ;
d. Contrôle dans le transmetteur (MU) vérifiant si la deuxième signature (S1') coïncide avec la première signature (S1) ;
pour lequel, lorsque la première signature (S1) et la deuxième signature (S1') coïncident, le transmetteur (MU) et le capteur (S) sont compatibles et le transmetteur (MU) est capable d'accéder aux données et/ou aux fonctions du capteur (S),
**caractérisé en ce que** le jeu de données caractéristiques (KDS) comprend une clé d'autorisation (BS), qui permet l'accès aux données et/ou aux fonctionnalités du capteur (S).

2. Procédé selon la revendication 1, **caractérisé en ce que** le jeu de données caractéristiques (KDS) contient des données, qui caractérisent de façon univoque un transmetteur.

3. Procédé selon la revendication 1 ou 2, **caractérisé en ce que**, lors du contrôle vérifiant la coïncidence des signatures (S1) et (S1'), les signatures (S1) ou (S1') ne sont pas échangées en texte en clair, mais avec des valeurs attribuées aux signatures (S1) ou (S1') par l'intermédiaire de fonctions unidirectionnelles.

4. Procédé selon l'une des revendications 1 à 3, **caractérisé en ce que** l'algorithme de signature est enregistré dans le capteur de telle manière à être protégé contre la lecture.

5. Procédé selon l'une des revendications 1 à 4, **caractérisé en ce que**, lorsque les signatures (S1) et (S1') ne coïncident pas, des droits minimum sont octroyés pour l'accès aux données.
